# EUROPEAN PATENT APPLICATION

(11) **EP 4 756 577 A1**
(43) Date of publication of application: **10.06.2026**
(21) Application number: 24217102.3
(22) Date of filing: 03.12.2024
(51) Int. Cl.: G06F 3/01, G06F 3/0362, B60K 35/25

(54) **HAPTIC FEEDBACK SYSTEM FOR A COMPUTER PERIPHERAL DEVICE**

(71) Applicant: Société Civile "GALILEO 2011", 98000 Monaco (MC)
(72) Inventor: WIEST, Stefan, 82234 Weßling (DE); CAROBIN, Alberto, 81247 München (DE); PASCUCCI, Antonio, 98000 Monaco (MC)
(74) Representative: Schmidt, Steffen J.

(57) **Abstract**

A haptic feedback system for a computer peripheral device, the system comprising: a rotor comprising a recess within the rotor; and a stator located within the recess of the rotor; wherein one of the rotor and the stator comprises a ferromagnetic material; wherein the other one of the rotor and the stator comprises a plurality of polarized magnets; wherein at least a first one of the plurality of magnets has a first polarity, and at least a second one of the plurality of magnets has a second polarity; wherein the first one of the plurality of magnets and the second one of the plurality of magnets are located adjacent to each other; wherein when the rotor is in a first position in relation to the stator, the system has a first magnetic flux configured to provide a first haptic feedback to a user of the system; wherein when the rotor is in a second position in relation to the stator, the system has a second magnetic flux configured to provide a second haptic feedback to the user of the system; wherein the first and second positions are different positions; and wherein the first magnetic flux is greater than the second magnetic flux.

## Description

### FIELD OF THE INVENTION

The present invention generally relates to a haptic feedback system for a computer peripheral device comprising a rotor comprising a recess within the rotor; and a stator located within the recess of the rotor.

### BACKGROUND TO THE INVENTION

US 9778760 B1 generally relates to a magnetic detent for input controls. This document discloses that a rotary input control includes a rotor assembly configured to employ a magnetic detent mechanism, wherein the rotor assembly includes a rotor that rotates around an axis of rotation and includes multiple magnetic elements disposed around the rotor. However, in this document, the stator is located outside of the rotor.

Further known solutions comprise a gear wheel comprising a ferromagnetic material, and a stator located outside of the gear wheel in order to create a detent effect, or a radially polarized rotor and stator to create this effect.

There is therefore a need for a system for providing haptic feedback to a user of a computer peripheral device that is more compact, while comprising a simpler mechanical design. This may result in a haptic feedback system that can be placed into any number of computer peripheral devices due to its reduced size, and for easy replacement of the system due to its simple mechanical nature.

### SUMMARY OF THE INVENTION

The invention is set out in the independent claim. Preferred embodiments of the invention are outlined in the dependent claims. Relevant aspects are also to be found hereinafter

We describe a haptic feedback system for a computer peripheral device, the system comprising: a rotor comprising a recess within the rotor; and a stator located within the recess of the rotor; wherein one of the rotor and the stator comprises a ferromagnetic material; wherein the other one of the rotor and the stator comprises a plurality of polarized magnets; wherein at least a first one of the plurality of magnets has a first polarity, and at least a second one of the plurality of magnets has a second polarity; wherein the first one of the plurality of magnets and the second one of the plurality of magnets are located adjacent to each other; wherein when the rotor is in a first position in relation to the stator, the system has a first magnetic flux configured to provide a first haptic feedback to a user of the system; wherein when the rotor is in a second position in relation to the stator, the system has a second magnetic flux configured to provide a second haptic feedback to the user of the system; wherein the first and second positions are different positions; and wherein the first magnetic flux is greater than the second magnetic flux.

The computer peripheral device is preferably a mouse, but can alternatively be a keyboard, a controller, a monitor, a storage device, or any other suitable peripheral devices.

The stator is configured to stay static during operation of the system, and the rotor is configured to rotate during operation of the system, e.g. by a finger of a user using the peripheral device (e.g. wheel on a mouse). The recess may be sized and shaped such that the entirety of the stator is located within the recess, or that only a part of the stator is located within the recess.

The polarized magnets may be located adjacent to one another on the rotor or stator. That is to say, a magnet comprising a first polarity may be directly adjacent to a magnet comprising a second polarity. This is achieved e.g. by pressing and annealing a mixture of permanent magnetic metal powder and a thermoplastic powder in the desired shape of the rotor or stator, and thereafter exposing the rotor or stator to a spatially alternating magnetic field to obtain the desired magnetic configuration.

The first and second magnetic fluxes are based on an interaction between the ferromagnetic magnet and the plurality of polarized magnets. For example, when the rotor is in the first position, at least a portion of the ferromagnetic material may be attracted to one of the polarized magnets, and repelled by the other, leading to a magnetic flux of the system being of a first value. When the rotor is in the second position, the portion of the ferromagnetic material may not be attracted or repelled by the plurality of polarized magnets, or the attraction and repelling forces may be weaker than those when the rotor is in the first position. Each of these positions leads to a different haptic feedback being felt by a user of the system. In particular, when the rotor is in the first position, the haptic feedback felt by the user of the system may comprise a resistive force to the user wanting to change the position of the rotor, and when the rotor is in the second position, the haptic feedback felt by the user of the system comprises a force indicating that the rotor is not in the first position.

In some examples, the rotor and the stator each comprise a substantially circular cross-section. This may allow for a particularly compact system as the stator can be, at least partially, within the rotor. Furthermore, this may be particularly advantageous in the use of wheels, dials and knobs in computer peripheral devices, as the rotor may be directly, or indirectly, interacted with by the user.

In some examples, the ferromagnetic material comprises a protrusion extending toward the plurality of magnets. This may lead to a greater difference between the first and second magnetic fluxes, thereby providing a greater difference between the first and second haptic feedbacks felt by the user when the rotor is in the first and second positions.

In some examples, when the rotor is in the first position, the protrusion is configured to be aligned with the first one of the plurality of magnets or the second one of the plurality of magnets; and when the rotor is in the second position, the protrusion is configured to not be aligned with the first one of the plurality of magnets or the second one of the plurality of magnets.

As a non-limiting example, when the rotor is in the first position, a protrusion, comprising a first polarity, may be aligned with a polarized magnet having a second polarity. Resultantly, the polarized magnet may be magnetically attracted to the aligned protrusion, and the protrusion may be repelled by the magnet comprising the first polarity, which is located adjacent to the magnet comprising the second polarity. This may lead to a high attraction force between the rotor and stator, thereby leading to a first haptic feedback comprising haptic information to the user that the rotor is in the first position. When the rotor is in the second position, the attracting and repelling forces between the rotor and stator may be uneven, resulting in a weaker magnetic flux, and the rotor wanting to return to the first position. This may mean that the haptic feedback felt by the user of the system comprises haptic information indicating that the system, and rotor, is not in the first position, leading to a feeling of the rotor wanting to return to said first position. This improves the feedback given to the user, leading to a more accurate determination of the positioning of the rotor. Furthermore, when the rotor is in the first position, this may allow for a reduction in accidental and unwanted movements of the rotor, leading to a more precise and accurate movement of the rotor.

In some examples, the ferromagnetic material comprises a plurality of protrusions; and the number of plurality of protrusions is equal to the number of the plurality of magnets. This may allow for a more even haptic feedback around the circumference of the rotor as it rotates from the first position to the second position and *vice versa.*

In some examples, the system further comprises an outer wheel; wherein the outer wheel is coupled to the rotor; wherein the outer wheel is rotatable with the rotor; and wherein the rotor is located between the outer wheel and the stator. The outer wheel may allow for at least one of the following functions:
1) The outer wheel may allow for the provision of more accurate tactile feedback to the user of the system due to, for example, its surface finish;
2) The outer wheel may contribute to the appearance of the system as it is the part of the system that extends out of the computer peripheral device to allow for the user to interact with the system. This, as a result, may indicate where the user should interact with the system; and
3) The outer wheel may add weight/mass to the system, thereby increasing the rotational inertia of the system as a whole. For this purpose, the outer wheel preferably comprises steel, preferably non-ferromagnetic steel (with an austenitic molecular structure), but additionally or alternatively may comprise any other material that adds weight/mass to the system. The material is also preferably one that does not interfere or distort the electromagnetic fields described herein. This may be particularly important in the embodiment where the stator comprises the ferromagnetic material.

In some examples, the system further comprises a system holder, wherein the system holder is configured to keep the stator static. This may allow for the user to receive more accurate haptic feedback on the position of the rotor. The system holder preferably comprises plastic, but may additionally or alternatively may comprise any other material that does not interfere or distort the electromagnetic fields described herein. The system holder may be of any suitable form factor that keeps the stator static.

In some examples, the system further comprises at least one screw, wherein the at least one screw is configured to couple the stator and the system holder. This may allow for the user to receive more accurate haptic feedback on the position of the rotor. Additionally or alternatively, any other suitable means such as, for example, gluing, welding and fixing may be used to couple the stator to the system holder.

In some examples, the rotor and the stator are located within the system holder. This may be advantageous in scenarios where the computer peripheral device can be moved in a lateral and/or longitudinal axis of the through hole described herein. Such a movement may be when, for example, the system is in a mouse, and the user presses down on the system to actuate a "middle click" on a scroll wheel. This may allow for the system to be moved through these axes without interfering with the relative positioning between the rotor and the stator, thereby allowing for the system to still function as described herein.

In some examples, each of the rotor and stator comprises a through hole for an elongated member, and wherein the through holes are aligned with one another. This may allow for a secure coupling between the rotor and the stator. It may also allow for the distance between the rotor and the stator to be kept constant, thereby improving the haptic feedback felt by the user of the system.

In some examples, the rotor is rotatable around a rotational axis of the through hole. This may allow for improved feedback to be given to the user of the system.

In some examples, the system further comprises the elongated member thread through both through holes, wherein a first end of the elongated member is coupled to the system holder. In some examples, the elongated member may be a spindle. The elongated member is preferably a cylindrical component, but can comprise any suitable form, that has an interference fit with the outer wheel, thereby making it a rotatable element. In such a scenario, the system holder may at least partially enclose both sides of the rotor and/or stator, and the elongated member may be positioned within cavities of the system holder. In some examples, there is no interference fit. In some examples, bushing may be used to reduce the rotational friction of the elongated member.

In some examples, the rotor is biased toward the first position based on the first magnetic flux being greater than the second magnetic flux. This may allow for a reduction in accidental and unwanted movements of the system and/or rotor. This may also allow for a force above a predetermined threshold to be needed to be applied to the rotor before it rotates, thereby allowing the user to be provided with feedback that the rotor is in the first position.

In some examples, the computer peripheral device is a mouse, and the system is located within the mouse.

In some examples, upon a rotation of a wheel of the mouse, the rotor is configured to rotate. The rotor preferably has a press fit with the outer wheel in order to transfer any rotation from the outer wheel to the rotor.

Although a system is described above, the skilled person understands that the processes and features mentioned herein may also relate to an apparatus and/or a method for providing haptic feedback to a user of a computer peripheral device.

### BRIEF DESCRIPTION OF THE DRAWINGS

These and other aspects of the invention will now be further described, by way of example only, with reference to the accompanying figures, wherein like reference numerals refer to like parts, and in which:
- Figures 1a and 1b: show a cross-sectional view and a perspective view of a first implementation of a haptic feedback system according to some examples as described herein;
- Figures 2a and 2b: show a rotational part and a stationary part of a first implementation of a haptic feedback system according to some examples as described herein;
- Figures 3a and 3b: show magnetic flux diagrams of a first implementation of a haptic feedback system according to some examples as described herein;
- Figures 4a and 4b: show a cross-sectional view and a perspective view of a second implementation of a haptic feedback system according to some examples as described herein;
- Figures 5a and 5b: show a rotational part and a stationary part of a second implementation of a haptic feedback system according to some examples as described herein; and
- Figures 6a and 6b: show magnetic flux diagrams of a second implementation of a haptic feedback system according to some examples as described herein.

### DETAILED DESCRIPTION OF THE INVENTION

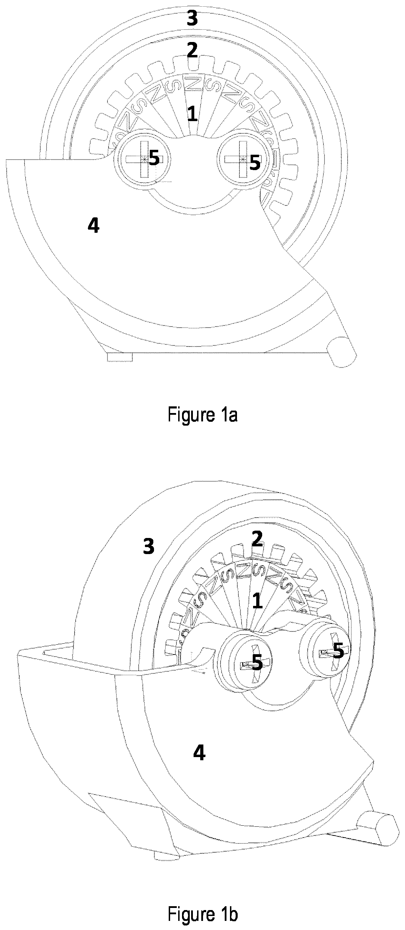

Figures 1a and 1b show a cross-sectional view and a perspective view of a first implementation of a haptic feedback system according to some examples as described herein.

As can be seen in figures 1a and 1b, the system comprises a stator 1, a rotor 2, an outer wheel 3, a system holder 4, and screws 5. In order for the invention, as described herein, to be carried out, only the stator 1 and rotor 2 are required, and the other elements are for supporting the stator 1 and rotor 2, and for further enhancing the usability of the system, in addition to the technical effects mentioned herein.

In this example, the stator 1 comprises a plurality of polarized magnets, and the rotor 2 comprises a ferromagnetic material.

Both the stator 1 and the rotor 2 comprise a circular cross-section, with the rotor 2 comprising a recess in which the stator 1 is completely contained. That is to say, when looking at a cross-section of the system, the rotor 2 and stator 1 are concentric within one another. In some examples, the rotor 2 may be relatively offset from the stator 1, leading to only a part of the stator 1 being located within the recess of the rotor 2.

The polarized magnets of the stator 1 comprise first polarities and second polarities, wherein magnets of different polarities are located adjacent to each other, leading to an alternating pattern of magnets comprising a first polarity and a second polarity around the stator 1. That is to say, the stator comprises a magnet of a first polarity located adjacent to a magnet of a second polarity, which is located adjacent to a second magnet of a first polarity and so on around the stator 1. The number of polarized magnets around the stator 1 is even due to this being needed to create the haptic feedback described herein. There may be any number of polarized magnets in the stator 1, as long as this number is even. In the example of figures 1a and 1b, there are 24 magnets, but the skilled person understands that this number may be increased or reduced based on the size of the system, and the end use of the system.

The rotor 2, in this example, comprises a plurality of protrusions extending towards the stator 1. In particular, the number of protrusions is equal to the number of polarized magnets on the stator 1. The skilled person understands that the number of protrusions on the rotor 2 and the number of polarized magnets on the stator 1 may be unequal, as long as the haptic feedback effect described herein is achieved. In an example, if the number of protrusions was less than the number of polarized magnets, as long as the angular spacing between the polarized magnets was the same as that between the protrusions, the invention described herein would still function. For example, using the embodiment seen in figures 1a and 1b, if the upper half of protrusions on the rotor 2 were removed, only half of the force would be generated with respect to the embodiment seen in figures 1a and 1b. This would result in a reduced tactile feedback given to the user, but this feedback would still be noticeable to said user.

The outer wheel 3 is located on the outer circumference of the rotor and is configured to add rotational inertia and/or weight and/or mass to the system. This results in an improved tactile feedback given to the user, as well as an improved visual experience.

The system holder 4 is located adjacent to, but does not contact, an outer circumference of the outer wheel 3, but it is to be understood that if the outer wheel 3 is not present, the system holder 4 is located adjacent to, but does not contact, an outer circumference of the rotor 2. The system holder 4 is configured to fix the entire system in place, and to ensure that the stator 1 is kept in place via the use, in this example, of screws 5. The skilled person understands that methods other than screws 5 such as, for example, gluing, welding and fixing, may be used to ensure the stator 1 stays static. In some examples, such as the one shown in figures 1a and 1b, the system holder 4 encompasses only a portion of the stator 1, rotor 2 and outer wheel 3, but in other examples, the system holder 4 may entirely encompass the stator 1, rotor 2 and outer wheel 3.

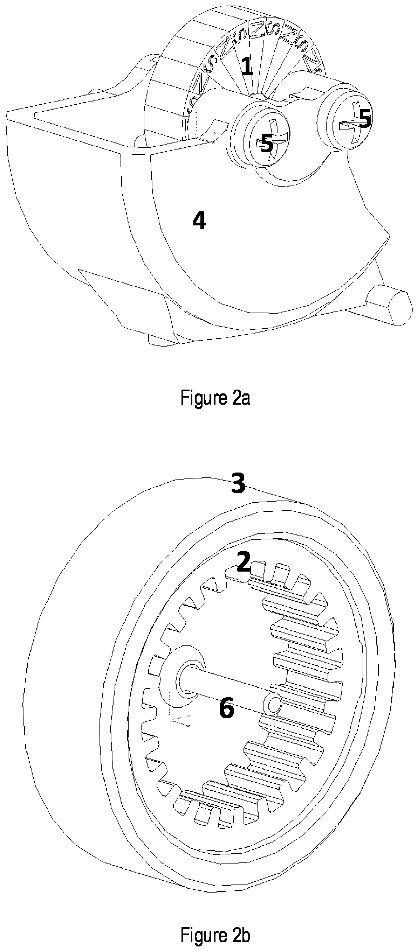

Figure 2a and 2b show a rotational part and a stationary part of a first implementation of a haptic feedback system according to some examples as described herein.

In figure 2a, the stationary part of the system is shown. That is to say, figure 2a shows the section of the system that does not move during use of the system. The stator 1 is coupled to the system holder 4 via the screws 5.

In figure 2b, the rotational part of the system is shown. That is to say, figure 2b shows the section of the system that does move during use of the system. Here, both the rotor 2 and the outer wheel 3 rotate around an elongated member 6. The elongated member 6 is thread through a first through hole located in the center of the stator 1 and a second through hole located in the center of the rotor 2. A first end of the elongated member 6 is then coupled to the system holder 4 in order to keep the rotor 2 in place as it rotates. The second end is also preferably coupled to the system holder 4, thereby allowing for the elongated member 6 to stay stationary with respect to the system holder 4. In some examples, the outer wheel 3 may and/or rotor 2 may be coupled to the elongated member 6 via an interference fit to ensure a secure coupling between these elements. In this example, the elongated member 6 rotates with the rotor 2 and outer wheel 3, but in other examples, the elongated member 6 may be a stationary element.

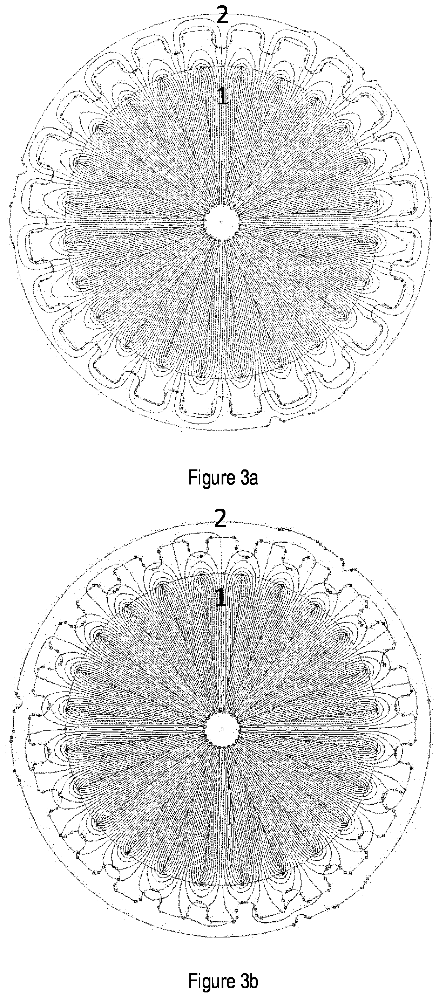

Figure 3a and 3b show magnetic flux diagrams of a first implementation of a haptic feedback system according to some examples as described herein.

Figure 3a shows a "stable" position of the system. That is to say, when rotor 2 is in a first position with respect to the stator 1, the system has a first magnetic flux.

Figure 3b shows an "unstable" position of the system. That is to say, when rotor 2 is in a second position with respect to the stator 1, the system has a second magnetic flux, wherein the first magnetic flux is greater than the second magnetic flux.

In particular, the "stable" position is achieved when a protrusion of the rotor 2 is aligned with a center of a polarized magnet. For example, when a protrusion, comprising a first polarity, is aligned with polarized magnet having a second polarity, the rotor will be magnetically attracted to the aligned protrusion, and the protrusion will be repelled by the magnets located either side of the polarized magnet, which each have a first polarity. This happens, in this example, with every second protrusion, leading to a stable positioning of the rotor 2, and therefore, system. This attractive force is counteracted by every other protrusion where said protrusions are aligned with a magnet having a same polarity, and is attracted by the magnets located either side of the polarized magnet it is aligned with. This may mean that the haptic feedback felt by the user of the system comprises a resistive force to the user wanting to change the position of the rotor 2 and/or state of the system. This, in turn, may allow for a reduction in accidental and unwanted movements of the system and/or rotor 2.

The "unstable" position is achieved when a protrusion of the rotor 2 is not aligned with a center of a polarized magnet. As the attracting and repelling forces are uneven in such a scenario. This results in a weaker magnetic flux, and the rotor 2 wanting to return to the "stable" position. This may mean that the haptic feedback felt by the user of the system comprises a force indicating that the system is not in the "stable" position, leading to a feeling of the rotor 2 and/or system wanting to return to said "stable" position which results in a biasing force towards the "stable" position.

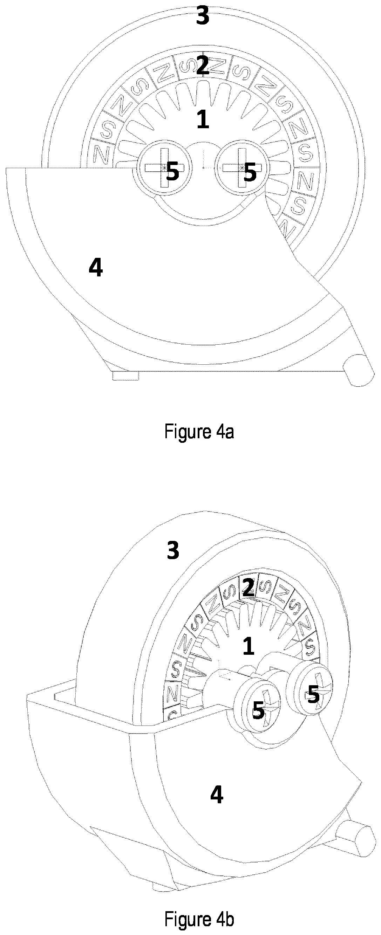

Figure 4a and 4b show a cross-sectional view and a perspective view of a second implementation of a haptic feedback system according to some examples as described herein.

Here, reference signs used in figures 1a and 1b are the same as those as figures 4a and 4b. The difference between figures 1a and 1b and figures 4a and 4b is that the rotor 2 comprises the plurality of polarized magnets, and the stator 1 comprises the ferromagnetic material. The outer wheel 3, system holder 4 and screws 5 still function in the same way as in figures 1a and 1b.

It can be additionally seen in these figures that the protrusions of the stator 1 extend outward towards the rotor 2, as opposed to inwards towards the stator 1, as seen in figures 1a and 1b.

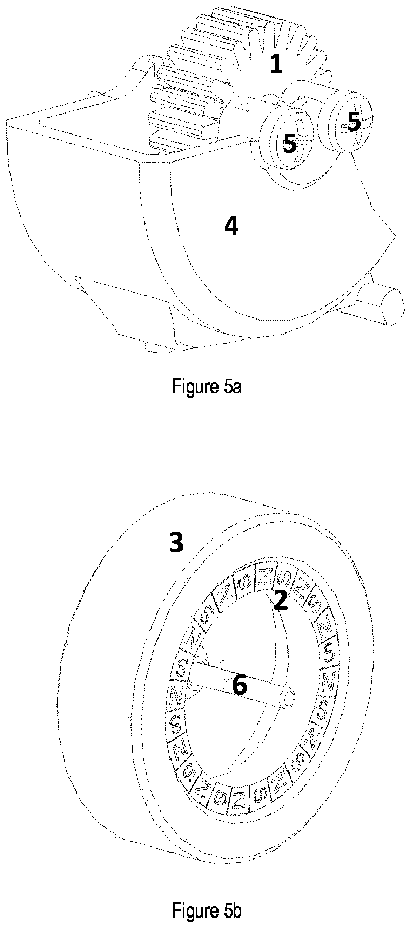

Figure 5a and 5b show a rotational part and a stationary part of a second implementation of a haptic feedback system according to some examples as described herein.

As only the magnetic materials of the stator 1 and the rotor 2 have been swapped when compared to figures 2a and 2b, the elements of figures 5a and 5b function in the same manner.

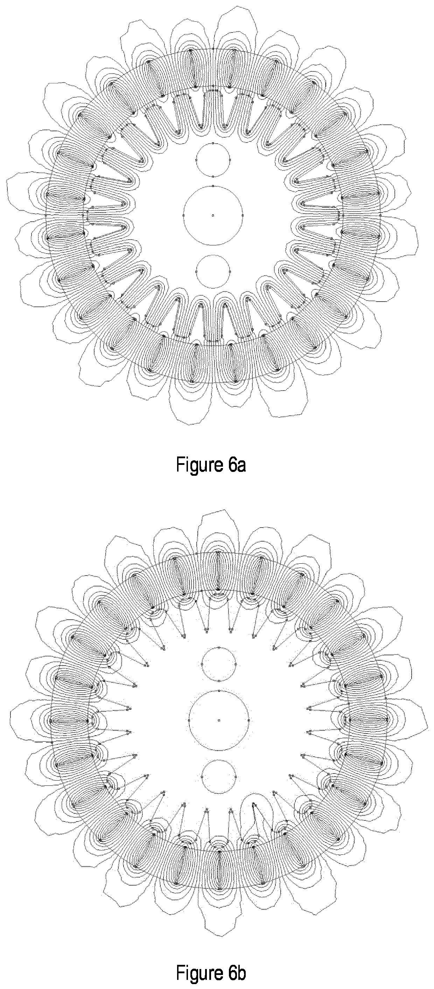

Figure 6a and 6b show magnetic flux diagrams of a second implementation of a haptic feedback system according to some examples as described herein.

Again, as only the magnetic materials of the stator 1 and the rotor 2 have been swapped when compared to figures 3a and 3b, the elements of figures 6a and 6b in relation to the "stable" and "unstable" positions function in the same manner.

No doubt many other effective alternatives will occur to the skilled person. It will be understood that the invention is not limited to the described embodiments and encompasses modifications apparent to those skilled in the art and lying within the scope of the claims appended hereto.

## Claims

1. A haptic feedback system for a computer peripheral device, the system comprising:
a rotor comprising a recess within the rotor; and
a stator located within the recess of the rotor;
wherein one of the rotor and the stator comprises a ferromagnetic material;
wherein the other one of the rotor and the stator comprises a plurality of polarized magnets;
wherein at least a first one of the plurality of magnets has a first polarity, and at least a second one of the plurality of magnets has a second polarity;
wherein the first one of the plurality of magnets and the second one of the plurality of magnets are located adjacent to each other;
wherein when the rotor is in a first position in relation to the stator, the system has a first magnetic flux configured to provide a first haptic feedback to a user of the system;
wherein when the rotor is in a second position in relation to the stator, the system has a second magnetic flux configured to provide a second haptic feedback to the user of the system;
wherein the first and second positions are different positions; and
wherein the first magnetic flux is greater than the second magnetic flux.

2. The system of claim 1, wherein the rotor and the stator each comprise a substantially circular cross-section.

3. The system of claim 1 or 2, wherein the ferromagnetic material comprises a protrusion extending toward the plurality of magnets.

4. The system of claim 3, wherein when the rotor is in the first position, the protrusion is configured to be aligned with the first one of the plurality of magnets or the second one of the plurality of magnets; and
wherein when the rotor is in the second position, the protrusion is configured to not be aligned with the first one of the plurality of magnets or the second one of the plurality of magnets.

5. The system of claim 3 or 4, wherein the ferromagnetic material comprises a plurality of protrusions; and
wherein the number of plurality of protrusions is equal to the number of the plurality of magnets.

6. The system of any one of the preceding claims, further comprising an outer wheel;
wherein the outer wheel is coupled to the rotor;
wherein the outer wheel is rotatable with the rotor; and
wherein the rotor is located between the outer wheel and the stator.

7. The system of any one of the preceding claims, further comprising a system holder, wherein the system holder is configured to keep the stator static.

8. The system of claim 7, further comprising at least one screw, wherein the at least one screw is configured to couple the stator and the system holder.

9. The system of claim 7 or 8, wherein the rotor and the stator are located within the system holder.

10. The system of any one of the preceding claims, wherein each of the rotor and stator comprises a through hole for an elongated member, and wherein the through holes are aligned with one another.

11. The system of claim 10, wherein the rotor is rotatable around a rotational axis of the through hole.

12. The system of claim 10 or 11, when dependent on any one of claims 7 to 9, further comprising the elongated member thread through both through holes, wherein a first end of the elongated member is coupled to the system holder.

13. The system of any one of the preceding claims, wherein the rotor is biased toward the first position based on the first magnetic flux being greater than the second magnetic flux.

14. The system of any one of the preceding claims, wherein the computer peripheral device is a mouse, and the system is located within the mouse.

15. The system of claim 14, wherein upon a rotation of a wheel of the mouse, the rotor is configured to rotate.
